(19) Europäisches Patentamt / European Patent Office / Office européen des brevets

(11) **EP 1 901 524 B1**

(12) **EUROPEAN PATENT SPECIFICATION**

(45) Date of publication and mention
of the grant of the patent:
**11.03.2009 Bulletin 2009/11**

(51) Int Cl.:
***H04L 29/08*** (2006.01)

(21) Application number: **06019359.6**

(22) Date of filing: **15.09.2006**

(54) **Apparatus for supporting data communication between a configuration means and a data processing means for cross-layer optimization**

Gerät zur Unterstützung der Datenübertragung zwischen einer Konfigurationsvorrichtung und einer Datenverarbeitungsvorrichtung für Cross-Layer-Optimierung

Appareil pour assister la communication de données entre un moyen de configuration et un moyen de traitement de données pour une optimisation à couches croisées

(84) Designated Contracting States:
**DE GB**

(43) Date of publication of application:
**19.03.2008 Bulletin 2008/12**

(73) Proprietor: **NTT DoCoMo Inc.**
**Chiyoda-Ku**
**Tokyo 100-6150 (JP)**

(72) Inventors:
• **Saul, Andreas**
**80686 München (DE)**
• **Auer, Gunther**
**80339 München (DE)**

(74) Representative: **Stöckeler, Ferdinand**
**Schoppe, Zimmermann,**
**Stöckeler & Zinkler**
**Postfach 246**
**82043 Pullach bei München (DE)**

(56) References cited:
**WO-A-20/05041516** **US-A1- 2002 004 827**

**Description**

The present invention relates to an apparatus and a method for supporting data communication between a configuration means and a data processing, which are in particular suited in the field of cross-layer optimization, as it is for example needed in wireless communication systems, where cross-layer optimization as opposed to intra-layer optimization provides significant benefits in terms of system capacity and user satisfaction.

Cross-layer design is a paradigm that is more and more finding its way in the conception of modern communication systems. While conventional systems aim to design each layer of data transmission independently, the cross-layer approach considers the mutual effects of one layer on the others. By doing so, a single layer is not optimized for its maximum efficiency however, the overall efficiency of the system is improved.

For communication systems this means that besides of the data, additional control information has to be exchanged between the layers. For a bottom-up design control information is passed from a lower layer to an upper layer. Based on the information from the lower layer and depending on the own state, the upper layer decides on how to process and transmit the data. For a top down design the control information flow and decisions are correspondingly.

Cross-layer optimization is one possible way of cross-layer design. An objective function is chosen, which is used to determine the transmission parameters of one or multiple layers. Generally, the arguments of the objective function can be control information or data from one or from multiple layers. For cross-layer optimization, instead of achieving a local optimum of each layer, cross-layer optimization is seeking for the global optimum over all layers.

A major challenge in cross-layer design is parameter abstraction, i.e. it has to be decided which control information should be transmitted. Especially in this context it has to be considered:

- The physical location of the layers, for example a mobile device, a base station, a radio network controller, a router, an application server, etc.

- The delay for determining, transmitting and evaluating the control information.

- The computational complexity of determining and evaluating the control information.

- The overhead for exchanging the control information.

- The complexity of system design.

- The achievable performance improvement.

In L.-U. Choi, W. Kellerer, and E. Steinbach, "Cross-Layer Optimization for Wireless Multi-User Video Streaming," in Int. Conf. On Image Processing, 2004, a cross-layer optimization between an application layer and a radio link layer is described. The radio link layer is described in terms of transmission data rate, transmission packet error rate, data packet size and channel coherence time. Alternatively the paper proposed to transform the two parameters transmission packet error rate and channel coherence time into two equivalent transition probabilities of the Guilbert-Elliot model. A video streaming application is considered and the application layer is described in terms of a mean square error (MSE) distortion profile model. The abstracted parameter sets of link layer and application layer are provided to a cross-layer optimizer, which selects a non empty subset from the input set and informs this decision to the corresponding layers.

In L.-U. Choi, M. T. Ivrlac, E. Steinbach, and J. A. Nossek, Bottom-Up Approach to Cross-layer Design for Video Transmission over Wireless Channels," in Vehicular Technology Conf., vol. 5 spring 2005, pp. 3019-3025, the authors distinguish between operating modes, which are private parameters of a layer, and operating points, which are public parameters of a layer. The operating points represent a subset of operating modes and there is a mapping between operating points and operating modes, which is identified by intra-layer optimization. Each operating point is informed to an intra-layer optimizer, which selects the optimum operating point based on information for multiple layers. The selected operating points are informed to the corresponding layers. As an example in the paper the operating modes of physical and data link layer are abstracted by the parameters relative air time and transmit power ratio, or rather by the set of all possible pairs of them. The operating points of physical and data link layer are the sets of those pairs of relative air time and transmit power ratio, which are preferable according to some intra-layer optimization criterion. Furthermore, the authors consider a video streaming application and describe the application layer in terms of source distortion and loss distortion. For describing source distortion they model the distortion rate function by an equation, whose parameters have to be matched against the actually transmitted data. The loss distortion is also described by an analytic model, which has to be matched against the transmit data and which depends on the physical layer's packet error probability.

The considered operating points, which have to be transmitted between the layers, are chosen as data rate and packet error probability. While the authors do not discuss the transmission of control information, it is obvious that for practical realization not only the operating modes but also the parameters of their distortion-rate model and their loss distortion model have to be informed to the cross-layer optimizer.

In S. Khan, Y. Peng, E. Steinbach, M. Sgroi, and W. Kellerer," Application-Driven Cross-Layer optimization for Video Streaming over Wireless Networks," IEEE Communications Magazine, vol. 44, no. 1, PP. 122-230, January 2006, parameter abstraction is considered in order to reduce the number of parameters. Given examples for possible parameter abstractions are bit error rate for coding and modulation scheme, or net transmission rate and transition probabilities of a two-state packet erasure model for the channel transfer function.

In E. Setton, T. Yoo, X. Zhu, A. Goldsmith, and B. Girod, "Cross-Layer Design of Ad Hoc Networks for Real-Time Video Streaming," IEEE Wireless Communications, vol. 14, no. 4, pp. 59-65, August 2005, the authors consider cross-layer optimization for video transmission over ad-hoc networks. The parameter abstraction follows the ideas of what was described above and is based on the operating modes and points. Considered parameters are packet length on link layer and constellation size and symbol rate on physical layer, parameters representing the channel quality such as signal-to-interference-plus-noise-ratio (SINR), or link layer state information such as the bit-error-rate (BER) or supported data rate. Similarly, the network and MAC (MAC = Medium Access Control) layers might exchange the requested traffic rates and supportable link capacities.

The state of the art cross-layer optimization considerations described above have the disadvantage that the exchange of large amounts of information is necessary between a optimizer and the corresponding or involved layers.

WO 2005/041516 A2 provides a cross layer optimization concept. Moreover, an apparatus for controlling an operation of a plurality of communication layers of a layered communication system is disclosed, wherein the layered communication system transmits information through a communication channel, the apparatus comprising a means for providing a property of the communication channel, an extractor for extracting a first set of parameters from a first communication layer and a second set of parameters from a second communication layer to determine current statuses of the first and second communication layers, means for providing a first abstraction model and a second abstraction model, wherein the fist abstraction model models a characteristic of the first communication layer and the second abstraction model models a characteristic of the second communication layer, means for determining an optimized first set of parameters to be used by the first communication layer and an optimized second set of parameters to be used by the second communication layer based on the first abstraction model, the second abstraction model, the channel property and an optimized goal, means for providing the optimized first set of parameters to the first communication layer and the optimized second set of parameters to the second communication layer. Therefore, an efficient exploitation of the communication resources can be achieved.

Lt is the object of the present invention to provide a new concept for supporting exchange of state parameters providing reduced amount of data to exchange and reduced utilization of transmission resources.

This object is achieved by a apparatus according to claim 1, and a method for configuring according to claim 20, and an apparatus for converting according to claim 28.

The invention provides an apparatus for supporting data communication between a configuration means and a data processing means, said configuration means being effective for managing communication between said data processing means and at least one additional data processing means based on a plurality of states of said data processing means or said additional data processing means. The apparatus comprises a modeller for simulating said data processing means to retrieve at least a subset of said states of said data processing means or at least one measure being characteristic for said states from received model parameters comprising a reduced data amount when compared to states data describing said states.

The invention further provides a method for supporting data communication between a configuration means and a data processing means said configuration means being effective for managing communication between said data processing means and at least one additional data processing means based on a plurality of states of said data processing means or additional data processing means. The method comprising the step of simulating said data processing means to retrieve at least a subset of said states or at least one measure being characteristic for said states of said data processing means from received model parameters comprising a reduced data amount when compared to states data describing said states.

The invention provides an apparatus for converting state parameters to model parameters, comprising an extraction unit being adapted for extracting model parameters from state parameters based on model information.

The present invention is based on the finding that the amount of state data or control information that has to be exchanged between a configuration means, e.g. an optimizer, and a data processing means, e.g. protocol layer, can be reduced significantly, if the configuration means utilizes a modeller of the corresponding data processing means. Because only little control information has to be exchanged, utilizing model parameters, the overhead created in a network is reduced. Consequently, the network can be operated in a more efficient manner.

Embodiments of the present invention will be detailed using the figures attached, in which

Fig. 1a-1f          show a block diagrams of embodiments of the present invention;

Fig. 2a and 2b      show block diagrams of other embodiments of the present invention;

Fig. 3          shows a block diagram of another embodiment of the present invention;

Fig. 4          shows a block diagram of another embodiment of the present invention;

Fig. 5          shows block diagrams of different embodiments of the present invention, illustrating multiple examples of system configurations;

Fig. 6          illustrates advantages of embodiments of the present invention;

Fig. 7          depicts a system model with a data flow; and

Fig. 8          shows a block diagram of another embodiment of the present invention.

In the following detailed description of the invention state parameters specify a state or a set of states of a data processing means. A data processing means or layer as referred to in the following, can only be in a single state at a time, the state being defined by a set of layer parameters making up the state parameters. The term state parameters can refer to a single state as well as to a multiplicity of states. An alternatively interpretation to state parameters is a measure being characteristic for said states. Model parameters are input values to a modeller, which is capable of deriving state parameters from the model parameters.

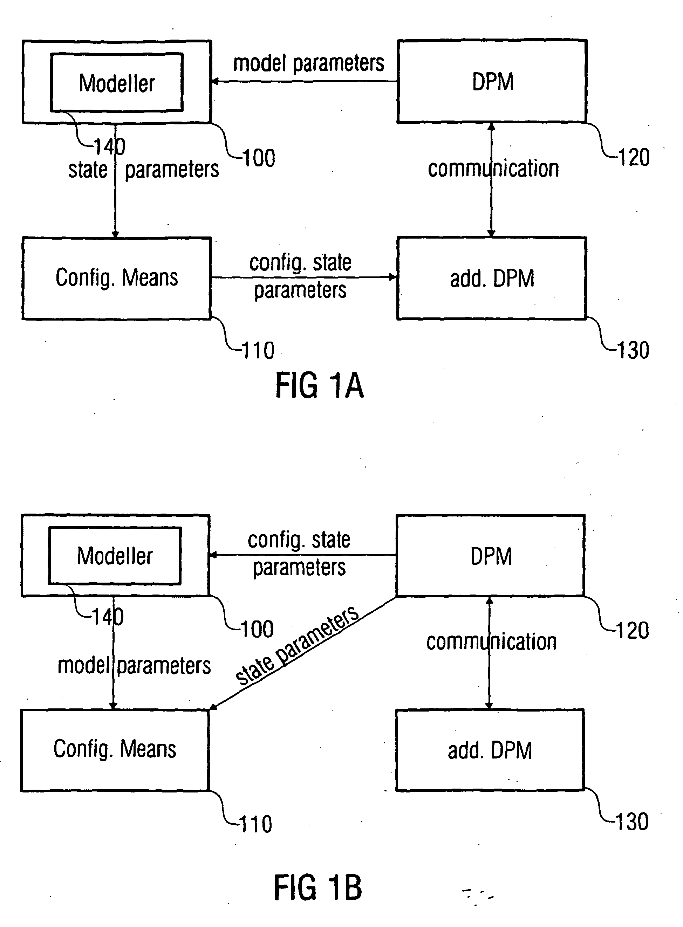

Fig. 1a shows a block diagram of an embodiment of the present invention. Fig. 1a depicts an apparatus 100 for supporting data communication between a configuration means 110 and a data processing means 120. The configuration means 110 manages the communication between the data processing means 110 and at least one additional data processing means 130, based on state parameters or states from the data processing means 120, in Fig. 1a only a single additional data processing means 130 is displayed. The apparatus 100 comprises a modeller 140 for simulating the data processing means 120 to retrieve at least a subset of the state parameters or states or at least one measure being characteristic for said states of the data processing means 120 from received model parameters comprising a reduced data amount when compared to state parameters data or state data describing the state parameters or states. In Fig. 1a the apparatus 100 receives the model parameters from the data processing means 120 and in another embodiment it can be integrated in the configuration means 110. In one embodiment of the present invention the model parameters represent a certain state of the data processing means 120 and the modeller 140 uses the model parameters to extract at least a subset of theses states or at least one measure being characteristic for said states.

The model parameters require a lower amount of data than the state parameters or states data, which enables conservation of transmission resources between the data processing means 120 and the modeller 140. In an embodiment of the present invention, which is applicable to a communication system utilizing cross-layer optimization, valuable resources can be saved as less control information has to be exchanged between a cross-layer optimizer, corresponding to the configuration means 110 in Fig. 1a, and the involved protocol layers. In this embodiment the apparatus 100 is integrated in the configuration means 110.

Since the modeller has knowledge about the data processing means 120, which corresponds to a protocol layer in one embodiment of the present invention, static or semi-static data is not necessarily required to obtain the state parameters or a state or a measure being characteristic for said state of the layer. Static parameters can be constant within the in the modeller 140 without being updated, semi static parameters can be updated on much coarser time scale, providing the respective savings in data rate.

In another embodiment of the present invention the modeller 140 extracts only a subset of the state parameters or states or measures being characteristic for said states of the full set of state parameters available at the data processing means 120 to further save transmission resources, e.g. bandwidth on the link between the data processing means 120 and the modeller 140. In an embodiment the modeller 140 could use interpolation with state parameters or states of the subset of state parameters to estimate state parameters not being available directly in the subset.

In Fig. 1a the configuration means 110 provides configuration state parameters to the additional data processing means 130 in order to manage the communication between the data processing means 120 and the additional data processing means 130. The configuration state parameters or configuration state are transmitted to the additional data processing means 130 at their full bandwidth not being optimized through the modeller 140 in the embodiment in Fig. 1a.

Fig. 1b shows another block diagram of another embodiment of the present invention. Similar components as in Fig. 1a are displayed, i.e. the apparatus 100, the configuration means 110, the data processing means 120, the additional data processing means 130, and the modeller 140. In the embodiment depicted in Fig. 1b, the modeller 140 receives the model parameters from the configuration means 110. The apparatus 100 can be implemented in the data processing means 120 and the state parameters extracted or simulated by the modeller 140 serve as configuration state parameters for the data processing means 120, in order to manage the communication between the data processing means 120 and the additional data processing means 130. The data processing means 120 provides state parameters directly to the configuration means 110.

In this embodiment of the present invention transmission resources are saved on the link between the configuration means 110 and the data processing means 120, therefore in one embodiment of the present invention the modeller 140 and the data processing means 120 are collocated or implemented together. In yet another embodiment of the present invention, inventive apparatuses 100 can be used for both links, the one between the data processing means 120 and the configuration means 110 as well as on the link between the configuration means 140 and the data processing means 120. In another embodiment with another link between the configuration means 110 and the additional data processing means 130 another inventive apparatus 100 can be utilized for provision of configuration state parameters, respectively model parameters to the additional data processing means 130.

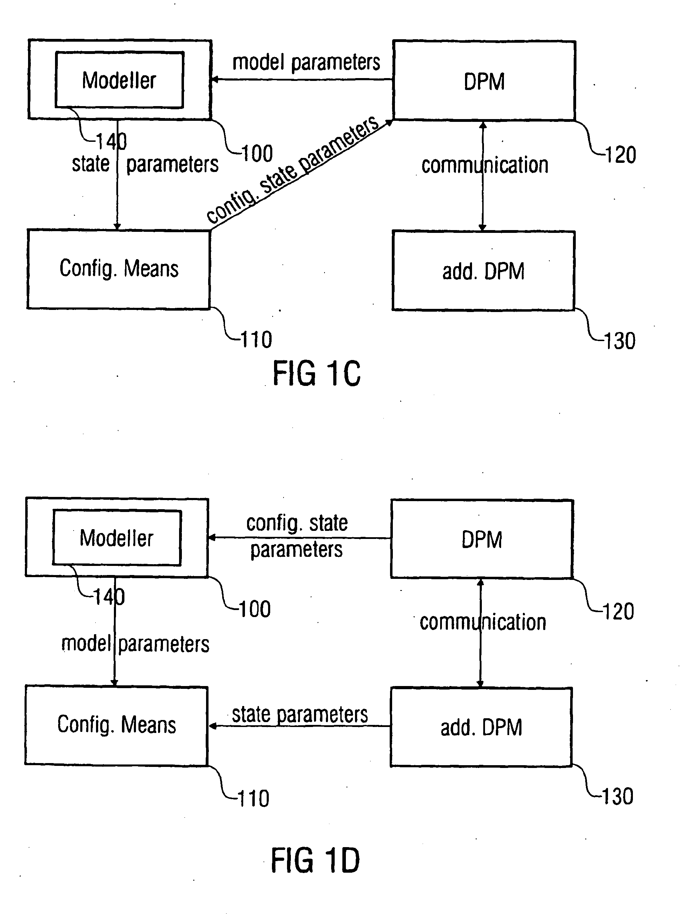

A further block diagram of an embodiment of the present invention is depicted in Fig. 1c, where similar components as in the preceding Figures are shown, i.e. the apparatus 100, the configuration means 110, the data processing means 120, the additional data processing means 130, and the modeller 140. In the scenario displayed in Fig. 1c the configuration means 110 provides the configuration state parameters to the data processing means 120, in order to manage the communication between the data processing means 120 and the additional data processing means 130.

Yet another block diagram of an embodiment of the present invention is depicted in Fig. 1d, where similar components as in the preceding Figures are shown, i.e. the apparatus 100, the configuration means 110, the data processing means 120, the additional data processing means 130, and the modeller 140. In the scenario displayed in Fig. 1d, the configuration means 110 receives the state parameters or states from the additional data processing means 130. The configuration means 110 provides the model parameters to the apparatus 100 with the modeller 140 and the modeller 140, which could in an embodiment be implemented in the data processing means 120, then derives configuration state parameters from the model parameters and provides them to the data processing means 120, in order to manage the communication between the data processing means 120 and the additional data processing means 130.

As mentioned above in other embodiments of the present invention all combinations of the Figs. 1a, 1b, 1c, and 1d are conceivable.

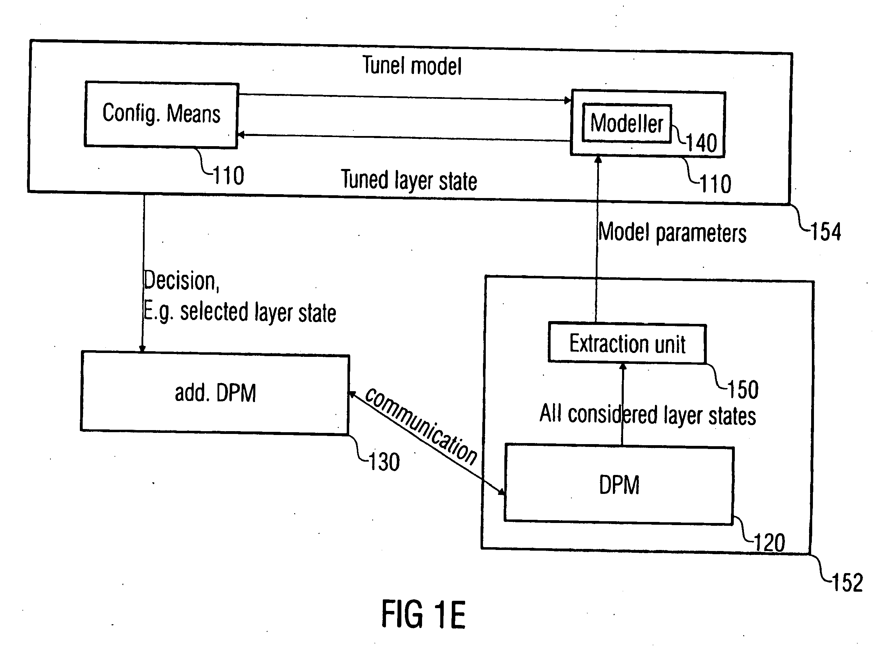

A more detailed embodiment of the present invention is shown in Fig. 1e, where similar components as in the preceding Figures are shown, i.e. the apparatus 100, the configuration means 110, the data processing means 120, the additional data processing means 130, and the modeller 140. Additionally Fig. 1c shows an extraction unit 150 for deriving model parameters from the state parameters or states provided by the data processing means 120. The extraction unit 150 and the data processing means 120 are integrated in a first entity 152, which could for example correspond to a protocol layer. As in the state of the art the data processing means 120 provides state parameters, however the extraction unit 150 derives model parameters from these state parameters. As explained above the model parameters correspond to a lower amount of data, therefore requiring less transmission resources when transmitted. In the embodiment displayed in Fig. 1e the model parameters are transmitted to a second entity 154, which could for instance correspond to an optimizer in a cross-layer optimization scenario.

The apparatus 100 with the modeller 140 and the configuration means 110 are both integrated in the second entity 154 in the embodiment detailed in Fig. 1e. Within the second entity the configuration means 110 provides parameters for tuning the model, which can be seen as a candidate information to the modeller 140, the modeller 140 provides in turn tuned layer state parameters or states to the configuration means 110, which are based on the model parameters received from the fist entity 152. In order to find adequate configuration state parameters for the additional data processing means 130, fulfilling the task of the configuration means 110 of managing the communication between the data processing means 120 and the additional data processing means 130, several iterations of exchange of parameters for tuning the model and tuned layer state parameters can be carried out in an embodiment of the present invention. In another embodiment of the present invention the modeller 140 can provide the tuned layer state parameters to the configuration means 110 first, which forms an embodiment with a different configuration or optimization sequence.

The configuration means 110 can tune the model, e.g. by providing candidate configuration information to the modeller 140 and for instance iterate several candidate configurations in order to optimize settings for the additional data processing unit 130. Once a proper tuning for the modeller 140 is found, the configuration means 110 provides configuration state parameters, i.e. the decision or outcome from the communication with the modeller 140 to the additional data processing means 130. The configuration state parameters provided from the configuration means 110 to the data processing means 120 may in one embodiment be a selected layer state for the additional data processing means 130, again possibly corresponding to a protocol layer.

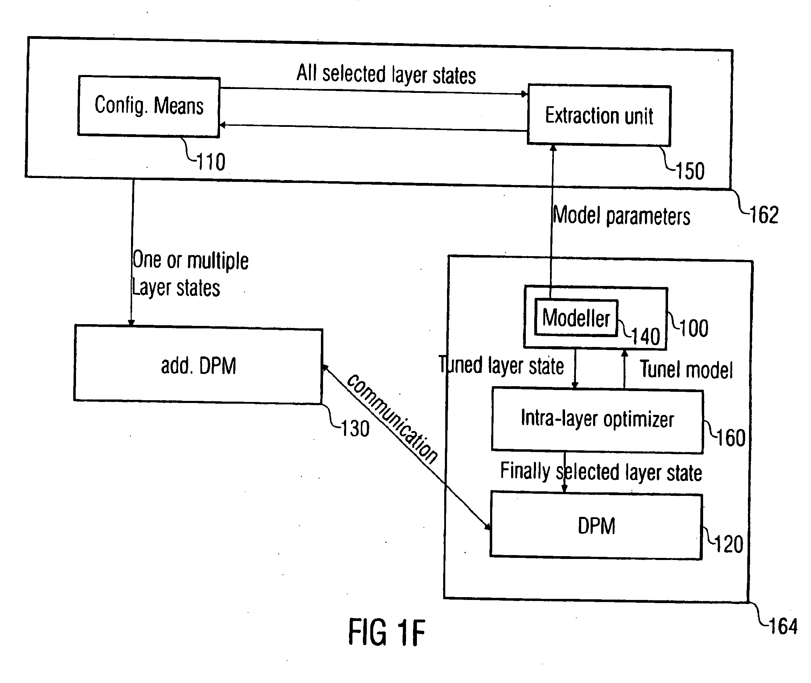

Fig. 1f depicts the similar components as Fig. 1e, i.e. the apparatus 100, the configuration means 110, the data processing means 120, the additional data processing means 130, the modeller 140, and the extraction unit 150. Additionally Fig. 1f shows an intra-layer optimizer 160. In the embodiment depicted in Fig. 1f the additional data processing means 130 provides one or several layer state parameters to the configuration means 110, which is collocated with the extraction unit 150 in a first entity 162, in one embodiment corresponding to a cross-layer optimization entity. The configuration means 110 then selects a set of layer states for the data processing means 120, which is in this embodiment collocated with the intra-layer optimizer 160 and the apparatus 100 comprising the modeler 140 in a second entity 164, which can again correspond to a protocol layer in an embodiment of the present invention. All selected layer states are then provided for instance by state parameters to the extraction unit 150 inside the first entity 162. The extraction unit 150 corresponds to an apparatus for converting state parameters to model parameters being adapted for extracting model parameters from state parameters based on model information. The model parameters are then transmitted on the link between the first entity 162 and the second entity 164, again the model parameters taking up less amount of data than the state parameters.

Within the second entity 164 the apparatus 100 receives the model parameters and the modeller 140 subsequently provides a set of state parameters to the intra-layer optimizer 160. Between the modeller 140 and the intra-layer optimizer 160 an intra-layer optimization is carried out by the intra-layer optimizer 160, providing parameter for tuning the model and the modeller 140 providing tuned layer state parameters. Based on the optimization, the intra-layer optimizer 160 selects a final set of state parameters, which are then provided to the data processing means 120.

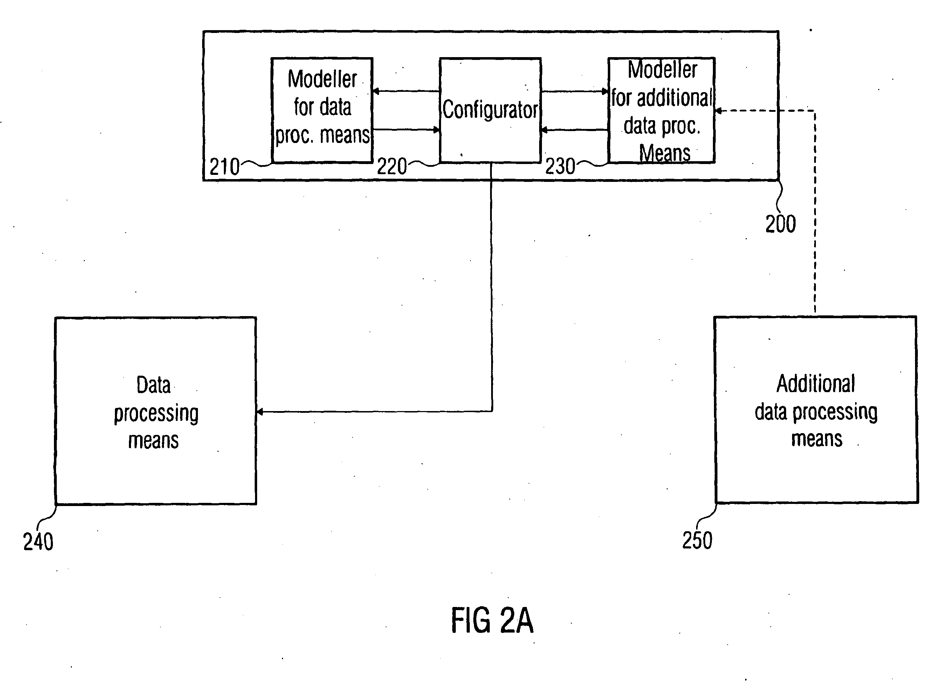

Fig. 2a shows an apparatus 200 comprising a modeller 210 for a first data processing means, a configurator 220, and a modeller 230 for an additional data processing means. Fig. 2a further shows a first data processing means 240 and an additional data processing means 250.

The apparatus 200 for also configuring the first data processing means 240 by providing configuration state parameters, based e.g. on model parameters received from the additional data processing means 250, comprises the first modeller 210 for modeling the first data processing means 240 based on first candidate configuration information from the configurator 220 and for providing a first modeller output, i.e. configuration state parameters.

In Fig. 2a the arrows within the apparatus 200 indicate the exchange of information, i.e. the exchange of candidate configuration information and output information from the modellers 200 and 230. The dotted arrow connecting the additional data processing means 250 with the modeller 230 from the additional data processing means within the apparatus 200 indicates the provision of model parameters. The solid lined arrow connecting the configurator 220 from the apparatus 200 and the first data processing means 240 indicates configuration state parameters being provided by the apparatus 200. Within the apparatus 200 the second modeller 230 models the additional data processing means 250 based on the model parameters and provides a second modeller output to the configurator 220. Furthermore, the configurator 220 selects the first candidate configuration information provided to the modeller 210 for the first data processing means 240 as the configuration state parameters that are provided to the first data processing means 240 based on the first 210 and second modeller 230 output.

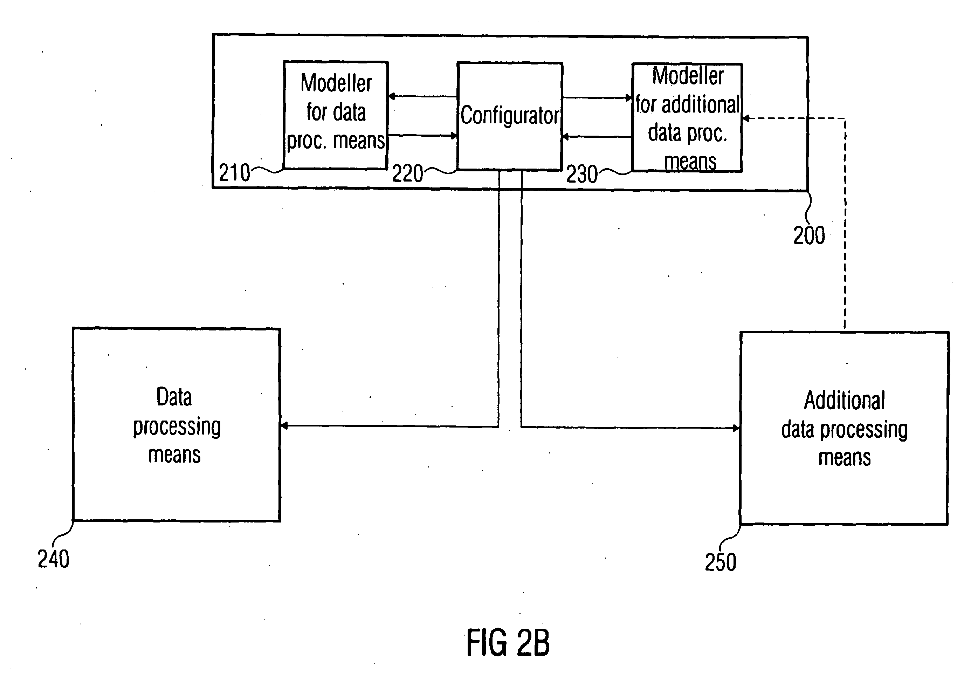

Fig. 2b shows another embodiment of the present invention. Fig. 2b shows a similar block diagram as Fig. 2a, similar reference signs are used for the components. The apparatus 200 depicted in Fig. 2b is adapted for configuring the additional data processing means 250 by providing configuration state parameters, which is indicated by the second solid arrow starting within the apparatus 200 at the configurator 220 and pointing to the additional data processing means 250. In the embodiment of the present invention which is depicted in Fig. 2b the second modeller 230 is adapted for modeling the additional data processing means 250 based on the first model parameters that are provided by the additional data processing means 250 and second candidate configuration information. Furthermore, in this embodiment of the present invention the configurator 220 is adapted for selecting the second candidate configuration state parameters as the second configuration information based on the first 210 and a second modeller 230 output.

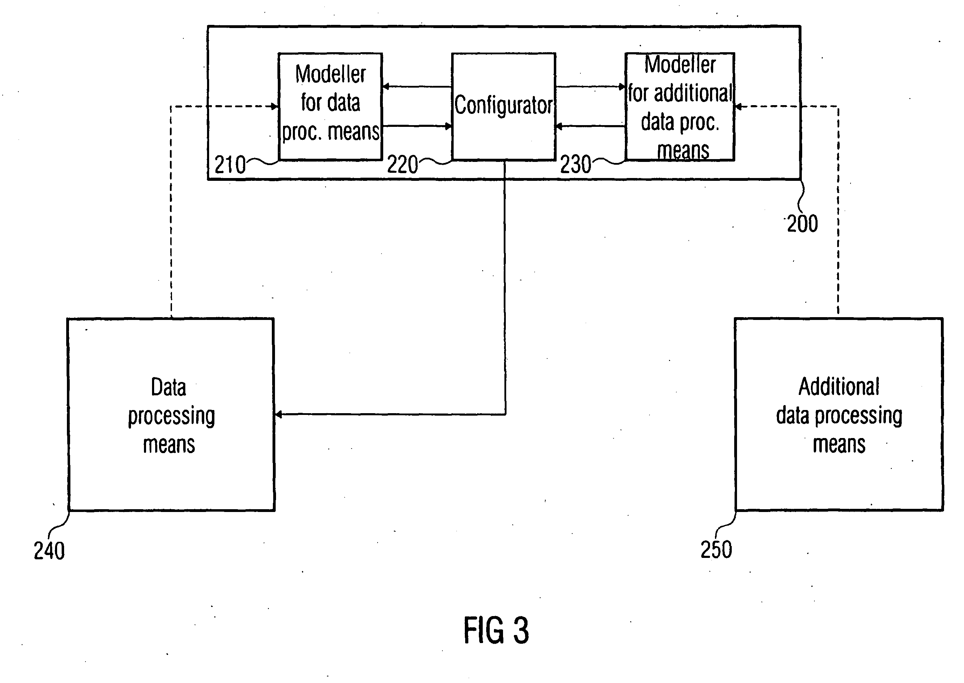

A block diagram of yet another embodiment of the present invention is displayed in Fig. 3. Fig. 3 shows the same components as the Figs. 2a and 2b. Comparing the embodiment depicted in Fig. 3 to the embodiment depicted in Fig. 2a the apparatus 200 of Fig. 3 is adapted for receiving second model parameters from the first data processing means 240, which is indicated by the dotted arrow starting from the first data processing means 240 pointing towards the modeller 210 for the first data processing means 240 within the apparatus 200. For the embodiment depicted in Fig. 3 the first modeller 210 for the first data processing means 240 is adapted for modeling the fist data processing means 240 based on the second model parameters and on first candidate information.

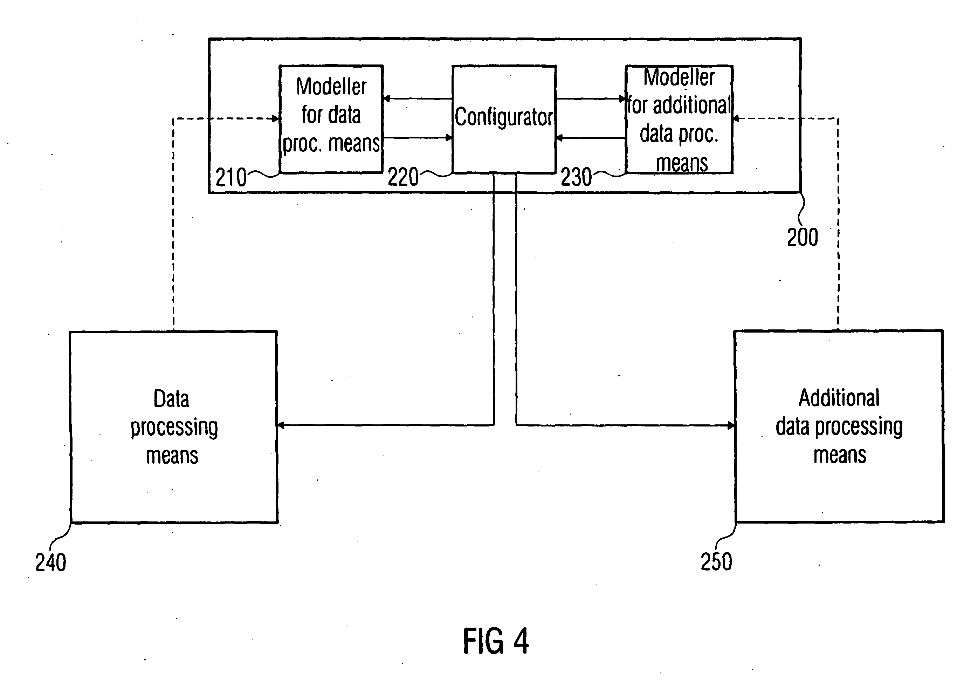

A block diagram, of yet another embodiment of the present invention is displayed in Fig. 4. Fig. 4 shows the same components as Figs. 1 to 3, however the apparatus 200 depicted in Fig. 4 receives model parameters from the first data processing means 240 and from the additional data processing means 250, which is indicated with the two dotted arrows starting from the data processing means 240 and 250 pointing to the corresponding modelers 210 and 230. Furthermore, the apparatus 200 provides configuration state parameters to the first data processing means 240 and to the additional data processing means 250, which is indicated by the two solid arrows starting from the configurator 220 within the apparatus 200 pointing to the corresponding data processing means 240 and 250.

Generally, the inventive apparatus and method can also be used in the paths for providing configuration state parameters in the embodiments depicted in Figs. 1a to 1f, 2a and 2b, 3, and 4. The inventive apparatus can be used in all communication paths between the data processing means 240, the additional data processing means 250, and the configuration means or configurator 220.

In order to detail further embodiments of the present invention a communication system consisting of at least two protocol layers is considered. Generally a plurality of protocol layers is conceivable, where all layers are coupled with at least one inventive apparatus. Furthermore, a decision unit, as an embodiment of the inventive apparatus as for example an optimizer, which might or might not be associated to one of the protocol layers is assumed. In general a decision unit receives control information, e.g. model or state parameters from at least one layer and transmits control or configuration information, i.e. model or configuration state parameters, to at least one other layer to inform a decision. Some or all of the exchanged control information is characteristic for more than one state of one of the involved layers.

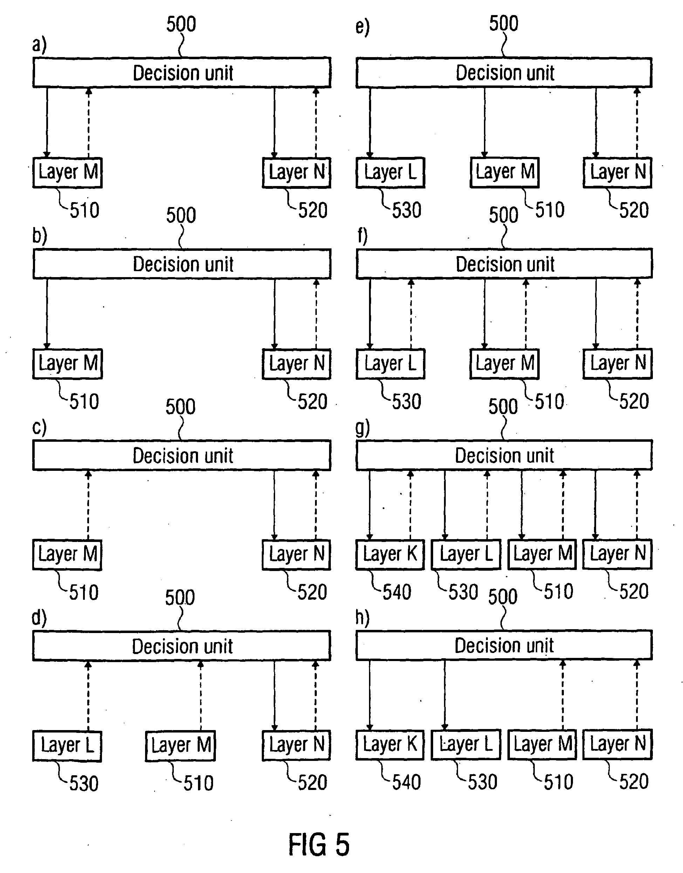

In Fig. 5 several example configurations are illustrated. In Fig. 5 solid arrows indicate control or configuration information, i.e. model or configuration state parameters, used by the decision unit to inform a layer about decisions and a dotted arrow indicates control information, i.e. model or state parameters, being provided by the corresponding protocol layer in order to enable optimized decisions by the decision units. Fig. 5 shows several example configurations in the Figs. 5a to 5h. Within each example configuration there is a decision unit 500, as an embodiment of the inventive apparatus. Furthermore, Fig. 5 shows in dependence on the embodiment the protocol layers layer M 510, layer N 520, layer L 530, and layer K 540. Moreover, Fig. 5 indicates the transfer of control information from a layer to the decision unit 500 as dotted arrows and configuration or control information being transferred from the decision unit 500 to the corresponding protocol layer as solid arrows. All information being transferred can potentially be utilizing the inventive apparatus, i.e. using model parameters. All configuration information, control information, and data can be in form of model or state parameters.

Fig. 5a shows correspondingly a decision unit 500, a protocol layer M 510 and a protocol layer N 520. The decision unit 500 exchanges control data, i.e. state or model parameters provided by the protocol layers in both directions with each of the protocol layers layer M 510 and layer N 520.

In Fig. 5b the decision unit 500 receives control information only from the protocol layer N 520, but provides configuration information to both layers layer M 510 and layer N 520.

Fig. 5c shows a scenario where the decision unit 500 receives control information from layer M 510 and layer N 520, but provides configuration information only to layer N 520.

Fig. 5d shows another embodiment where the decision unit 500 receives control information from three layers, namely the layer M 510, the layer N 520, and the layer L 530. In this scenario depicted in Fig. 5d the decision unit 500 provides configuration information only to layer N 520.

In Fig. 5e the decision unit 500 provides control information to three layers, namely the layer M 510, the layer N 520, and layer L 530. The decision unit 500 receives control information only from the layer N 520 in the scenario depicted in Fig. 5e.

The Fig. 5f depicts a scenario where the decision unit 500 exchanges control information with each of the three layers layer M 510, the layer N 520, and layer L 530. All three layers provide control information to the decision unit 500, and the decision unit in turn provides configuration information to each of the layers.

In Fig. 5g the decision unit exchanges control information with even four layers, namely layer M 510, the layer N 520, the layer L 530, and the layer K 540. All four layers provide control information to the decision unit 500, the decision unit 500 in turn provides configuration information to each of the layers.

In Fig. 5h the decision unit 500 provides control or configuration information to two layers, namely layer L 530 and layer K 540. The decision unit 500 receives control information from two different layers, namely the layer M 510 and the layer N 520.

In conventional approaches of cross-layer design the control information, which is exchanged between a layer and the decision unit, is a set of layer state parameters. The decision unit receives a set of layer parameters, which describe one or multiple possible layer state states, and delivers a set of layer state parameters, which describe one desired layer state.

In contrast to that, embodiments of the present invention apply a model before transmitting the control information. The model describes the relationship between a set of layer states and a set of model parameters. The model is characterized by the property that the number of model parameters is smaller, insofar that less amount of data is required than the number of corresponding layer parameters would require, which describe more than one layer state. This is advantageous because instead of the layer parameters the model parameters are exchanged between a layer and the decision unit. If there is more than one model, also the used model is informed.

The model and the model parameters might describe a corresponding set of layer parameters perfectly in some embodiments and imperfectly in other embodiments of the present invention. A layer and a decision unit can be both transmitter and receiver of control information, in the general case layers are data processing means, and in the general case a decision unit is a configuration means. At a transmitter of control information an extraction unit is present, which extracts the model parameters from the layer states. At the receiver of control information model units are operative, i.e. modellers for the data processing means, which model the layers using the informed model parameters, similar to what was described for Figs. 1a to 1f. The decision unit can make its decision and the layers can process data based on the observed properties of the model units.

In embodiments of the present invention model parameters and layer parameters are exchanged in order to describe a set of layer states partially by model parameters and partially by layer parameters. Instead of considering the states and the parameters of the complete layer also the states and parameters of a part of the layer can be considered. There can be more than one decision unit in the system. It is possible to inform more than one layer state from a layer to a decision unit, which can decide on one layer state. It is also possible to inform more than one possible decision from the decision unit to a layer, which can make the final decision, e.g. by an intra-layer optimizer.

In another embodiment of the present invention interpolation is used for the model. The model parameters are chosen in such a way that multiple layer states are described by interpolation between corresponding layer parameters of different states. One particular choice of model parameters, which is easy to obtain, is an appropriately chosen subset of layer parameters.

Interpolation can be done as constant, linear, polynomial, spline or other kinds of interpolation.

In yet another embodiment of the present invention a vector valued function is used for the model. Let $x_{mn}$ be the layer parameters with, $n,m \in$ N, then the vector

$$\mathbf{x}_n = \left(x_{1n}, x_{2n}, ...\right)^T \qquad (1)$$

represents a layer state and the matrix.

$$\mathbf{X} = \left(\mathbf{x}_1, \mathbf{x}_2, ...\right) \qquad (2)$$

represents a set of layer states or states data or states parameters. Furthermore, let $y_{ij}$ be a model parameter with $i,j \in$ N, then the vector

$$\mathbf{y}_j = \left(y_{1j}, y_{2j}, ...\right)^T \qquad (3)$$

represents a set of model parameters, which correspond to one layer state, and the matrix

$$\mathbf{Y} = \left(\mathbf{y}_1, \mathbf{y}_2, ...\right) \qquad (4)$$

represents a set of model parameters, from which multiple layer states can be derived. The vector function can be formulated as

$$\mathbf{f} : \mathbf{X} \rightarrow \mathbf{Y} = \mathbf{f(X)}. \qquad (5)$$

The above description considers information passing from a layer to a decision unit. It is straight forward to formulate a vector function for passing control information from the decision unit to a layer.

It is also possible to use a model, which is equipped with memory, e.g. a Moore machine or a Mealy machine, as it is described in S. Devadas, H.-K. Ma, A. Newton, and A.

Sangiovanni-Vincentelli," A synthesis and optimization procedure for fully and easily testable sequential machines," IEEE Trans. On Computer-Aided Design of Integrated Circuits and Systems, vol. 8, no 10, pp. 2200-2107, Oct. 1989. If it is assumed that a Moore machine is used, then the input alphabet E are the layer state parameters and the output alphabet A are the model parameters, as e.g. being implemented in an extraction unit 150. With S being a finite number of machine states the relationship between layer state parameters and model parameters is given by the transition

function

$$T: S \, x \, \Sigma \to S \qquad (6)$$

and the output function

$$G: S \to \Lambda. \qquad (7)$$

The above description considers information passing from a layer to a decision unit, where in the decision unit layer state parameters are extracted by an inventive apparatus or method. It is straight forward to describe a state machine for passing control information from the decision unit to a layer.

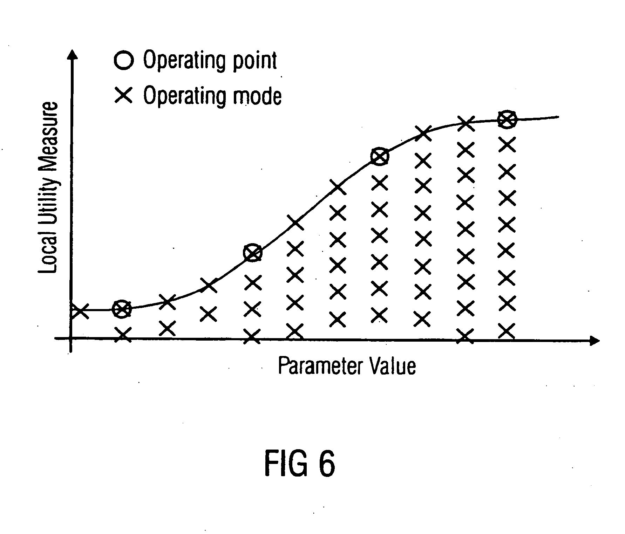

As part of the state of the art, proposals exist to use operating points and operating modes to reduce the amount of exchanged control information. Fig. 6 visualizes the approach of using operating points and operating modes serving as a basis for pointing out the advantages of the inventive apparatus and methods. In Fig. 6 operating points are indicated by circles and operating modes are indicated by crosses. The x-axis indicates a parameter value, i.e. it is the choice of one parameter for example $a_1$, as for example a signal-to-noise ratio in a certain slot, the y-axis indicates the utility measure u = $f(a_1, a_2, ...)$, for example a channel capacity. Depending on a choice of $a_1$ and depending on further parameters as for example $a_2$, $a_3$, ..., which cannot be determined from Fig. 6, different values of the utility measure can be achieved.

Each possible operating mode is marked with a cross in Fig. 6. An intra-layer optimization might deliver the subset of those operating modes, which have a maximum utility function. These operating modes are the crosses being located on the curve in Fig. 6. The optimum operating modes or, in a more general case, an arbitrary subcase of them can be chosen as operating points. Operating points are indicated by circles in Fig. 6. The operating points are informed to a decision unit, i.e. using the inventive apparatus, which decides on one of the operating points.

Using operating points is an effective method to reduce the amount of information, which has to be exchanged between a layer and the decision unit. In contrast to operating points, using the model and the inventive apparatus, according to embodiments of the present invention, can be even more effective. In the example shown in Fig. 6 the model would represent the curve in Fig. 6, i.e. the utility measure u=$f(a_1, a_2,...)$, or an approximation $u' \approx u$ of it with u'=f' $(c_1, c_2, ...)$. The function f' should be chosen in such a way that the approximation of u is sufficiently precise and that the number of parameters $c_1,...$ is as small as possible.

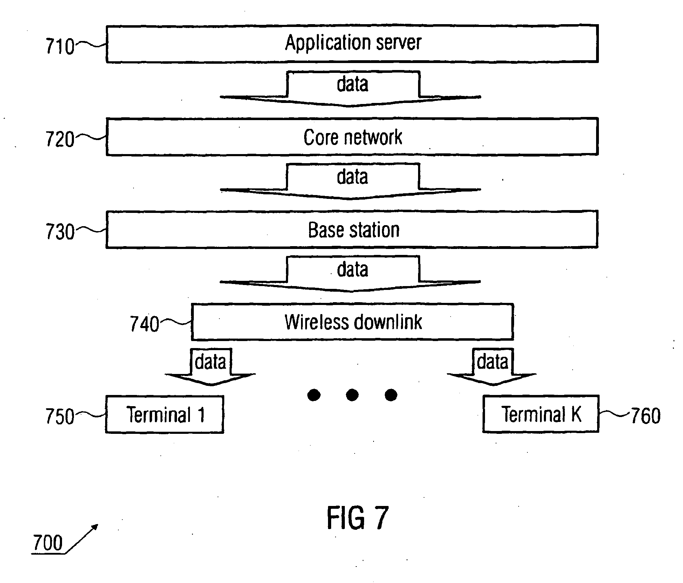

Fig. 7 shows a system 700 structure. The system 700 displayed in Fig. 7 comprises an application server 710, a core network 720, a base station 730, a wireless downlink 740, and K terminals, of which terminal 1 750 and terminal K 760 are displayed.

The application server 710 is providing data, for example video streams, to mobile users 750 and 760. First, the data is delivered over the core network 720 to the base stations 730. A wireless downlink 740 is shared by all users 750 and 760. There are K applications being fed with data, which are running on wireless terminals as for example terminal 1 750 to terminal K 760.

Considering a bottom-up design, it is possible to assign resources to applications according to different strategies on the data link layer, for example each user gets an equal share of the available resources or of the available data rate or the resources are shared according to some other fairness criterion. However, this might not satisfy application demands.

Considering a top down design, the application server 710 can decide on a desirable data rate and start to transmit. However, the application servers 710 do not have knowledge about the physical communication channel. Hence, it may happen that on the link layer it is physically impossible to serve all applications with the desired data rates, which results in bad performance and outage.

Both approaches, bottom-up and top-down, do not provide the best possible service to the users and therefore embodiments of the present invention consider cross-layer optimization between an application layer and medium access control layer.

Embodiments of the present invention carry out cross-layer optimization. The optimization is based on the following principles. On the application layer, in case of one embodiment of the present invention the objective mean opinion score (MOS) is used as utility function for the optimizer, using the inventive apparatus. The MOS is a mathematical metric, which describes the user satisfaction, e.g. when running applications or services over a communication network. In case of K applications, which' might or might not be run by different users, $MOS_k$ is the MOS being associated with application k. Then the utility measure is a function $f(MOS_1,...,MOS_K)$, which should be symmetric regarding a permutation of its arguments and which should be monotonic for each argument. Examples for the function f are the minimum or the sum of its arguments. In other embodiments of the present invention other functions f are conceivable.

On the physical layer, there are different modulation orders available, for example bipolar phase shift keying (BPSK), quadrature phase shift keying (QPSK), 16 quadrature amplitude modulation (16QAM), etc. Higher modulation order means higher data rate, which implies a higher MOS. On the other hand, higher modulation order means higher error probability, which implies a lower MOS.

On the physical layer, the symbols or subcarriers in multicarrier communication, can be transmitted with different powers. A higher transmission power implies a higher signal-to-noise-ratio (SNR), a lower error rate and a higher MOS. Having a constraint sum power budget, higher SNR and MOS for one symbol or application means lower SNR and MOS for the others.

On the medium access control layer, an application can be scheduled at different time instances or subcarriers in multicarrier communication. Assigning a transmission slot to an application increases the MOS of the scheduled application, while the others have to wait, which decreases their MOS. An application, which is scheduled more frequently, achieves a higher data rate and a higher MOS on the expense of the others. Furthermore, for radio transmission the achieved data rate depends not only on the number of assigned slots but also on an application's individual radio channel.

Embodiments of the present invention can be used for carrying out a cross-layer optimization in order to solve the mutual relationship between the performance of the layers. In one embodiment of the present invention each concerned layer transmits data which corresponds to model parameters from which a set of possible operating points can be derived to the optimizer. For each layer the optimizer selects that operating point, which maximizes the MOS based utility measure, and transmits its choice back, which can also be in form of model parameters to the corresponding layers.

In another embodiment of the present invention candidate modulation orders and candidate transmit power assignments can be derived from model parameters by the modeller and can be transmitted from the physical layer to an optimizer. Candidate schedules, i.e. possible combinations of slot assignments to applications, can be derived from model parameters which can be transmitted from the medium access control layer to the optimizer as well. Candidate application data rates and corresponding application distortion metrics can be derived from model parameters, which can be transmitted from the application layer to the optimizer. The optimizer can then evaluate the corresponding decisions by running the models of the concerned layers utilizing an optimization algorithm, according to what was described above.

The time variant radio channel is the most time critical component in the considered system. In order to minimize delays in the decision of the physical layer operating point, i.e. in transmission of the physical layer control information or state parameters, in the prior art an optimizer should be located close to the base station's radio transmitter. One advantage of the present invention is that when using the modellers, the optimizer can be located anywhere in the network, in one embodiment of the present invention.

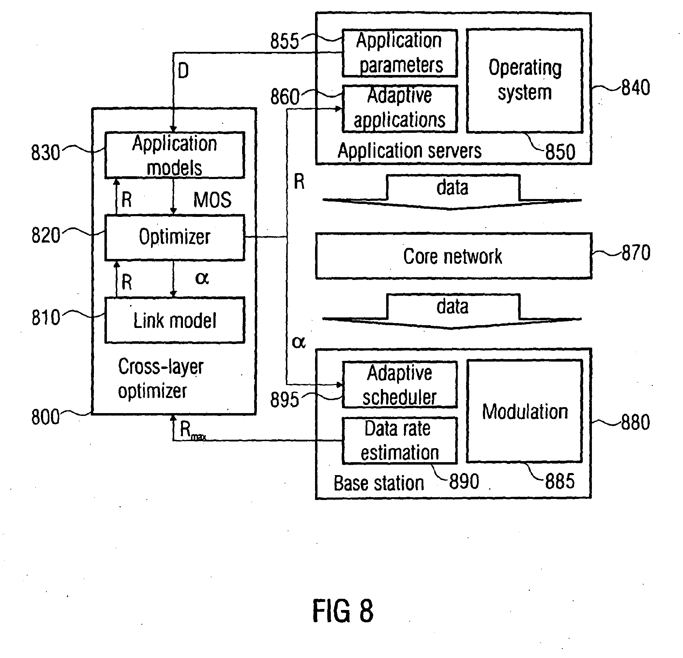

Fig. 8 illustrates another embodiment of the present invention. Fig. 8 shows an apparatus 800, comprising a link model 810, an optimizer 820, and an application model 830. Furthermore, Fig. 8 shows an application server 840, comprising an operating system 850, application parameters module 855 and adaptive applications module 860. Moreover, Fig. 8 shows a core network 870, and a base station 880 comprising a modulation module 885, a data rate estimation module 890, and an adaptive scheduler module 895.

Generally the task of the apparatus 800 is to find optimized configuration information for provision to the application server 840 and the base station 880. In order to evaluate optimized configuration information the optimizer or configurator 820 within the apparatus 800 utilizes the link model 810 as a first modeller and the application model 830 as a second modeller. In general an application, e.g. a video streaming application, can be carried out at different data rates, which can for instance be provided as part of control information, state or model parameters. According to the general task of cross-layer optimization there is no point in having an application server providing for example video streams at data rates, which cannot be supported at a later entity in the system, i.e. referring to the example depicted in Fig. 8 by the base station, resulting in data discard as for example buffers overflow.

It is an advantage of the present invention that the inventive apparatus can now facilitate different sets of data rates internally by having an optimizer providing candidate configuration information to a link and an application model, e.g. different distributions of data rates across the applications, and receiving feasibility feedback from the corresponding models. The state of the real data processing means or protocol layers is reflected and provided within the control information, which is considered by the models, respectively within the internal output of the modellers. The feasibility feedback from the models, i.e. the modeller outputs, can comprise different information. In a rather rudimentary embodiment of the present invention a simple 1 bit indication whether a particular candidate configuration is supportable or not could serve as the modellers' outputs. In another embodiment the modellers' outputs comprise more detailed information on how the candidate information shall be rendered in order to converge to a valid configuration.

From a different point of view the constellation between the optimizer 820 (or configurator), the link model 810 (or first modeller), and the application model 830 (or second modeller) establishes a control circuit, where the link model 810 simulates a link layer based on link layer control information, the application model 830 simulates an application layer based on application layer control information, and the optimizer 820 being a controller, providing the optimized configuration information to the actual protocol layers. According to this point of view embodiments of the present invention are control circuits, with at least two modellers simulating two data processing means, e.g. protocol layers, and a controller or configurator in between providing candidate configuration to the simulators, and evaluating their outputs in order to find an optimized candidate configuration for provision to the real data processing means as configuration information.

Fig. 8 visualizes how control information is processed and exchanged between a link layer at the base station 880, an application layer at an application server 840 and an optimizer, i.e. a apparatus 800, considering the system introduced above. As can be seen in Fig. 8 the base station 880 utilizes a data rate estimation module 890 to estimate data rates, which are then transmitted to the optimizer 800 in a vector

$$\mathbf{R}_{max} = (R_{max,1}, \quad \cdots \quad , \quad R_{max,K})^T, \qquad (8)$$

e.g. some possible maximum data rates. Furthermore, the application server 840 utilizes an application parameter's module 855 to provide further control information to the optimizer 800, which can be expressed as

$$\mathbf{D} = (D_1, \ldots, D_K)^T \qquad (9)$$

The apparatus 800 can now utilize the link model 810 and the application model 830 to evaluate the configuration information or layer state parameters, which is being transmitted to the base station 880 and the application server 840, in order to optimize the transmission of the data through the core network 870 from the application server 840 to the base station 880 and further on to mobile users. After the optimizer 820 within the apparatus 800 has optimized the configuration information utilizing the link model 810 and the application model 830 the control information

$$\mathbf{R} = (R_1, \ldots, R_K)^T, \qquad (10)$$

can be transmitted to the application server 840, where for example the decided data rates can be provided. Note, that another inventive apparatus can be effective at the application server 840, so only model parameters would have to be transmitted for an embodiment of the present invention.

Furthermore, the apparatus 800 provides control information possibly in form of model parameters, to the base station 880, as for example

$$\mathbf{\alpha} = (\alpha_1, \ldots, \alpha_K)^T, \qquad (11)$$

which would for example correspond to the number of scheduled slots. Each element of the above four vectors is associated with one of the K applications.

The cross-layer optimizer, i.e. the apparatus 800, comprises two models 810 and 830, which model the link layer and the application layer, respectively. For each application $k \in \{1,..., K\}$ the control information or model parameters from the applications provide a relationship

$$f_{A,k} : D_k, R_k \rightarrow MOS_k = f_{A,k}(R_k), \qquad (12)$$

which is the application model 830 in one embodiment of the present invention. We define the vector

$$\mathbf{MOS} = (MOS_1, \ldots, MOS_K)^T. \tag{13}$$

The link model 810 can be given by the relationship

$$f_{L,k}: \alpha_k, R_{max,k} \rightarrow R_k = f_{L,k}(\alpha_k). \tag{14}$$

The optimizer 820 utilizes a utility function

$$f_O: f_{A,1}, \ldots, f_{A,K} \rightarrow f_O(f_{A,1}, \ldots f_{A,K}), \tag{15}$$

which provides a relationship between the applications. In order to determine the coefficients **R** and $\alpha$ the optimization problem

$$\arg\max_{\{\alpha_1, \ldots, \alpha_K\}} f_O(f_{A,1}(f_{L,1}(\alpha_1)), \ldots, f_{A,K}(f_{L,K}(\alpha_K))) \tag{16}$$

is solved, which delivers $\alpha$ and via equation (14) also **R.** Within the apparatus 800 candidate state parameters are exchanged between the optimizer 820 and the link model 810, respectively between the optimizer and the application models 830. The optimizer 820 provides candidate data rates **R** to the application model 830 and the application model 830 provides a set of **MOS** as output. The optimizer provides a candidate number of scheduled slots $\alpha$, or resource consumption, to the link model 810, which in turn provides the corresponding data rates **R.** Therewith the optimizer 820 can carry out an optimization of the candidate state parameters before providing them to the real application server 840 and base station 880.

It is straight forward to generalize the above example system to the case that one mobile terminal runs multiple applications. Furthermore, it is straight forward to generalize the example to have multiple application servers.

In the following the link layer will be detailed. At the base station 880 a unit is required, which determines the parameter $R_{max}$ from the link layer, e.g. the data rate estimation module 890 in Fig. 8, and a unit which adapts the link layer based on the parameter $\alpha$, e.g. the adaptive scheduler module 895 in Fig. 8. Both tasks have to be done in such a way that the optimizer's expectations in the link layer are fulfilled. The optimizer's expectations are derived from the link model $f_{L,k}$. Therefore, a key point in designing a practical system is to find a link model, which can represent an actual link layer with sufficient accuracy. In one embodiment of the present invention the proposed link model is

$$f_{L,k}: R_k = \alpha_k R_{max,k}$$

with

$$0 \leq \alpha_k \leq 1 \forall k \in \{1, \ldots K\},$$
$$\sum_{k=1}^{K} \alpha_k = 1. \tag{17}$$

$R_k$ can for example be interpreted as the data rate of an application k or as the base station's down link data rate to a mobile terminal k.

If all resources at a base station are exclusively assigned to one application k, then the achievable data rate depends only on the mobile channel, which is time variant. While the instantaneous channel transfer function depends on the Doppler spreading, other properties of the channel like path loss or shadowing do not change that fast.

At the base station the data rate $R_{max,k}$ is estimated, which can be achieved in long term, if all resources were exclusively assigned to application k. This data rate is informed as control information to the inventive apparatus, for the optimizer, i.e. the configurator. In one embodiment of the present invention equation (17) can be perfectly fulfilled for example by a random scheduler, which schedules the application k with a probability of $\alpha_k$, or by a corresponding round robin scheduler, respectively.

Because only little control information has to be exchanged the overhead created in the network is much lower than with state of the art concepts. For the inventive apparatus utilizing for example link and application layer models, the cross-layer optimizer or the inventive apparatus, is not restricted by a limited number of link layer data rates, i.e. operating points, which are offered. Instead, for example from a link layer point of view any data rate can be achieved, which the optimizer is willing to consider. This means, comparing the inventive apparatus with the approach of operating points and operating modes, better system performance can be expected because the inventive apparatus characterizes the protocol layers, here especially the link layer, more precisely.

In a conventional system for cross-layer optimization, all considered schedules have to be transmitted from the link layer to the optimizer, or rather the K data rates of each user, which are achieved by the corresponding schedule. For $N_{slot}$ slots there are

$$K^{N_{slot}} \tag{17}$$

permutations, i.e. possible schedules. However, since a random scheduler does not make use of any channel knowledge, all slots should be considered equally. The scheduler's task is to assign K users to $N_{slots}$ slots, i.e. to find all combinations of K elements, $N_{slots}$ at a time, whereas one user may be scheduled in multiple slots, i.e. repetitions are allowed. Hence, the actual number of schedules to consider is smaller than in equation (17) and given for example in E. Kreyszig, Advanced Engineering Mathematics, 7th ed. Wiley, 1993, by

$$\binom{K+N_{slot}-1}{N_{slot}} = \frac{(K+N_{slot}-1)!}{(N_{slot})!(K-1)!} \tag{18}$$

This means that for the conventional system

$$K\frac{(K+N_{slot}-1)!}{(N_{slot})!(K-1)!} \tag{19}$$

data rates have to be transmitted to the optimizer and one value, which denotes the chosen schedule, is transmitted back. In contrast to that the proposed parameter abstraction needs to transmit only K data rates from the link layer to the optimizer. K values have to be transmitted back. Tab. 1 shows the number of exchanged parameters for some examples.

Tab.1:

| Number of slots | $N_{slot}$ | 52 | 8 |
|---|---|---|---|
| Number of users | K | 2 | 8 |
| Exchanged parameters for: | | | |
| All possible schedules | $K^{N_{slot}+1}+1$ | 9.0e15 | 1.3e8 |
| Only schedules with different data rates | $K\frac{(K+N_{slot}-1)!}{(N_{slot})!(K-1)!}+1$ | 107 | 5.1e4 |
| Model based | 2K | 4 | 16 |

In the conventional approach a significant reduction of exchanged parameters is achieved by intra-layer optimization, i.e. by considering only a subset of schedules, which deliver different data rates. However, for a high number of users and slots it might be still infeasible to consider all combinations. In contrast to that with the proposed model-based parameter abstraction only a small number of parameters have to be exchanged even for many users and slots.

The parameters, which are exchanged between the inventive apparatus and the protocol layers, i.e. the data processing means, vary much less in time than for example adaptive modulation or power assignment. Therefore, the cross-layer optimization according to embodiments of the present invention is expected to be less delay sensitive and the optimizer may be located at any convenient location in the network, for example at the base station or at a radio network controller if available.

Depending on certain implementation requirements of the inventive methods, the inventive methods can be implemented in hardware or software. The implementation can be performed using a digital storage medium, in particular, a disc, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

Reference List

| | |
|---|---|
| 100 | Apparatus for supporting |
| 110 | Configuration means |
| 120 | Data processing means |
| 130 | Additional data processing means |
| 140 | Modeller |
| 150 | Extraction unit |
| 152 | First entity |
| 154 | Second entity |
| 160 | Intra-Layer optimizer |
| 162 | First entity |
| 164 | Second entity |

| | |
|---|---|
| 200 | Apparatus |
| 210 | Modeller for the first data processing means |
| 220 | Configurator |
| 230 | Modeller for the additional data processing means |
| 240 | First data processing means |
| 250 | Additional data processing means |

| | |
|---|---|
| 500 | Decision unit |
| 510 | Layer M |
| 520 | Layer N |
| 530 | Layer L |
| 540 | Layer K |

| | |
|---|---|
| 700 | System structures |
| 710 | Application server |
| 720 | Core network |
| 730 | Base station |
| 740 | Wireless downlink |
| 750 | Terminal 1 |
| 760 | Terminal K |

| | |
|---|---|
| 800 | Apparatus |
| 810 | Link model |
| 820 | Optimizer/configurator |

830 Application model
840 Application server
850 Operating system
855 Application parameter module
860 Adaptive application's module
870 Core network
880 Base station
885 Modulation module
890 Data rate estimation module
895 Adaptive scheduler module

**Claims**

1. Apparatus (100) for supporting data communication between a configuration means (110) and a data processing means (120), said configuration means (110) being effective for managing communication between said data processing means (120) and at least one additional data processing means (130) based on a plurality of states of said data processing means (120) or the additional data processing means (130), said apparatus (100) comprising:

   a modeller (140) for simulating said data processing means (120) to retrieve at least a subset of said states of said data processing means (120) or at least one measure being characteristic for said states from received model parameters comprising a reduced data amount when compared to state data describing said states, wherein the received model parameters comprise a maximum data rate supported by the data processing means or the additional data processing means.

2. Apparatus (100) of claim 1, being implemented in the configuration means (110) and wherein the modeller (140) is adapted for receiving the model parameters from said data processing means (120).

3. Apparatus (100) of claim 1 or 2, being implemented in the data processing means (120) and wherein the modeller (140) is adapted for receiving model parameters from said configuration means (110) and for extracting configuration states or at least one measure being characteristic for said states.

4. Apparatus (100) of one of the preceding claims, wherein the modeller (140) is adapted for receiving model parameters from an extraction unit (150), the extraction unit (150) being adapted for deriving model parameters from the states of the data processing means (120) or from the configuration means (110).

5. Apparatus (200) of one of the preceding claims, comprising an additional modeller (230) for the additional data processing means (250), the apparatus (200) comprising a configurator (220), the modeller (210) and the additional modeller (230) being adapted for exchanging candidate configuration information with the configurator (220), the configurator (220) being adapted for selecting a configuration state parameter or model parameter for the data processing means (240) or the additional data processing means (250) based on the candidate configuration information exchanged with the modeller (210) and the additional modeller (230).

6. Apparatus (200) of claim 5, being adapted for transmitting model parameters or configuration states to the data processing means (250) or the additional data processing means (250), wherein the additional modeller (230) is adapted for modeling the additional data processing means (250) based on model parameters or states received from the additional data processing means (250) or an extraction unit.

7. Apparatus (200) of one of the claims 5 or 6, wherein the modeller (210) or the additional modeller (230) are adapted for providing the modeller or additional modeller output to the configurator (220) comprising information on variations of candidate configuration information and wherein the configurator (220) is adapted for changing the candidate information based on the variations.

8. Apparatus (200) of one of the claims 5 to 7, wherein the modeller (210) and the additional modeller (230) are adapted for considering model parameters or states from the data processing means (210) or the additional data processing means (250) comprising information on a state of a data processing means.

9. Apparatus (100;200) of one of the claims 1 to 8, wherein one of the modellers (210; 230) is implemented as a state machine.

10. Apparatus (200) of one of the claims 5 to 9, wherein the configurator (220) is implemented as a state machine.

11. Apparatus (100;200) of one of the claims 1 to 10, wherein the modeller (210) or the additional modeller (230) are adapted for modeling subsets of states of the data processing means (240) or the additional data processing means (250) based on model parameters or states from the data processing means (240) or the additional data processing means (250), and wherein the modeller (210) or the additional modeller (230) are adapted for modeling another subset of states of the data processing means (240) or the additional data processing means (250) based on interpolation between states of the subset of states of the data processing means (240) or the additional data processing means (250).

12. Apparatus (200) of one of the claims 6 to 11, wherein the modeller (210) or the additional modeller (230) is adapted to exchange model parameters or states represented by vector valued functions.

13. Apparatus (200) of one of the claims 6 to 12, wherein the modeller (210) or the additional modeller (230) is adapted for exchanging model parameters or states with the data processing means (240) or the additional data processing means (250) representing different layers of a multi-layer communication system.

14. Apparatus (100;200) of one of the claims 1 to 13, wherein the modeller (210) or the additional modeller (230) is adapted for exchanging model parameters or states with the data processing means (240) or the additional data processing means (250) being implemented in a protocol layer, a link layer, an application layer, a physical layer, a network layer, a transport layer, a presentation layer, a session layer or a medium access control layer.

15. Apparatus (200) of one of the claims 6 to 14, wherein the modeller (210) or the additional modeller (230) is adapted for exchanging model parameters or states with the data processing means (240) or the additional data processing means (250) and the configurator (220) is adapted for selecting configuration states or model parameters based on optimizing an objective function.

16. Apparatus (200) of one of the claims 6 to 15, wherein the modeller (210) or the additional modeller (230) is adapted for exchanging model parameters or states with the data processing means (240) or the additional data processing means (250) one of them being implemented in an application layer, and the configurator (220) is adapted for selecting configuration states or model parameters based on a mean opinion score.

17. Apparatus (200) of one of the preceding claims, comprising additional modellers for modeling additional data processing means.

18. Apparatus (200) of one of the preceding claims, wherein the modeller (210) or the additional modeller (230) is adapted for exchanging model parameters or states comprising maximum data rates $R_{max,k}$ of an application or user or entity k supportable by the data processing means (240) or the additional data processing means (250).

19. Apparatus (200) of one of the preceding claims, wherein the modeller (210) or the additional modeller (230) is adapted modeling the data processing means (240) or the additional data processing means (250) by a product of a maximum data rate $R_{max,k}$, of an application or user or entity k supportable by the data processing means (240) or the additional data processing means (250)and a coefficient $\alpha_k$ being associated to an application or user or entity k's resource consumption getting an actual applications data rate $R_k$, according to

$$R_k = R_{max,k}\ \alpha_k.$$

20. Method for supporting data communication between a configuration means (110) and a data processing means (120), said configuration means (110) being effective for managing communication between said data processing means (120) and at least one additional data processing means (130) based on states of said data processing means (120), said method comprising the steps of:

simulating said data processing means (120) to retrieve at least a subset of said states or at least one measure being characteristic for said states of said data processing means (120) from received model parameters comprising a reduced data amount when compared to states data describing said states, wherein the received model parameters comprise a maximum data rate supported by the data processing means or the additional data processing means.

**21.** Method of claim 20, comprising a step of receiving the model parameter from said data processing means (120).

**22.** Method of claim 20 or 21, comprising a step of receiving model parameters from said configuration means (110) and a step of extracting configuration states.

**23.** Method of one of the claims 20 to 22, comprising a step of receiving model parameters from an extraction unit (150), the extraction unit (150) being adapted for deriving model parameters from all states of the data processing means (120).

**24.** Method of one of the claims 20 or 23, comprising a step of transmitting model parameters from an extraction unit (150), the extraction unit (150) being adapted for deriving model parameters from states for the modeller (140).

**25.** Method of one of the claims 20 or 24, comprising a step of modeling an additional data processing means (250); a step of exchanging candidate configuration information with a configurator (220); and a step of selecting configuration states or model parameters for the data processing means (240) or the additional data processing means (250) based on the candidate configuration information exchanged.

**26.** Method of one of the claims 20 to 25, comprising a step of transmitting model parameters or configuration states to the additional data processing means (250) or the data processing means; a step of receiving model parameters or states received from the additional data processing means (250); and a step of modeling the additional data processing means (250) based on model parameters or states received from the additional data processing means (250).

**27.** Computer program having a program code for performing one of the methods of the claims 20 to 26, when the program code runs on a computer.

**Patentansprüche**

**1.** Vorrichtung (100) zum Unterstützen einer Datenkommunikation zwischen einer Konfigurationseinrichtung (110) und einer Datenverarbeitungseinrichtung (120), wobei die Konfigurationseinrichtung (110) zum Verwalten einer Kommunikation zwischen der Datenverarbeitungseinrichtung (120) und zumindest einer zusätzlichen Datenverarbeitungseinrichtung (130) basierend auf einer Mehrzahl von Zuständen der Datenverarbeitungseinrichtung (120) oder der zusätzlichen Datenverarbeitungseinrichtung (130) wirksam ist, wobei die Vorrichtung (100) folgende Merkmale aufweist:

einen Modellierer (140) zum Simulieren der Datenverarbeitungseinrichtung (120), um zumindest einen Teilsatz der Zustände der Datenverarbeitungseinrichtung (120) oder zumindest ein für die Zustände kennzeichnendes Maß aus empfangenen Modellparametern wiederzuerlangen, die eine reduzierte Datenmenge verglichen mit Zustandsdaten aufweisen, die die Zustände beschreiben, wobei die empfangenen Modellparameter eine maximale Datenrate aufweisen, die durch die Datenverarbeitungseinrichtung oder die zusätzliche Datenverarbeitungseinrichtung unterstützt wird.

**2.** Vorrichtung (100) gemäß Anspruch 1, die in der Konfigurationseinrichtung (110) implementiert ist und bei der der Modellierer (140) zum Empfangen der Modellparameter von der Datenverarbeitungseinrichtung (120) angepasst ist.

**3.** Vorrichtung (100) gemäß Anspruch 1 oder 2, die in der Datenverarbeitungseinrichtung (120) implementiert ist, und wobei der Modellierer (140) zum Empfangen von Modellparametern von der Konfigurationseinrichtung (110) und zum Extrahieren von Konfigurationszuständen oder zumindest eines für die Zustände kennzeichnenden Maßes angepasst ist.

**4.** Vorrichtung (100) gemäß einem der vorhergehenden Ansprüche, bei der der Modellierer (140) zum Empfangen von Modellparametern von einer Extraktionseinheit (150) angepasst ist, wobei die Extraktionseinheit (150) zum Ableiten von Modellparametern von den Zuständen der Datenverarbeitungseinrichtung (120) oder von der Konfigurationseinrichtung (110) angepasst ist.

5. Vorrichtung (200) gemäß einem der vorhergehenden Ansprüche, die einen zusätzlichen Modellierer (230) für die zusätzliche Datenverarbeitungseinrichtung (250) aufweist, wobei die Vorrichtung (200) einen Konfigurator (220) aufweist, wobei der Modellierer (210) und der zusätzliche Modellierer (230) zum Austauschen von Kandidatenkonfigurationsinformationen mit dem Konfigurator (220) angepasst sind, wobei der Konfigurator (220) zum Auswählen eines Konfigurationszustandsparameters oder Modellparameters für die Datenverarbeitungseinrichtung (240) oder die zusätzliche Datenverarbeitungseinrichtung (250) basierend auf den Kandidatenkonfigurationsinformationen angepasst ist, die mit dem Modellierer (210) und dem zusätzlichen Modellierer (230) ausgetauscht werden.

6. Vorrichtung (200) gemäß Anspruch 5, die zum Übertragen von Modellparametern oder Konfigurationszuständen an die Datenverarbeitungseinrichtung (240) oder die zusätzliche Datenverarbeitungseinrichtung (250) angepasst ist, wobei der zusätzliche Modellierer (230) zum Modellieren der zusätzlichen Datenverarbeitungseinrichtung (250) basierend auf Modellparametern oder Zuständen angepasst ist, die von der zusätzlichen Datenverarbeitungseinrichtung (250) oder einer Extraktionseinheit empfangen werden.

7. Vorrichtung (200) gemäß einem der Ansprüche 5 oder 6, bei der der Modellierer (210) oder der zusätzliche Modellierer (230) zum Liefern der Ausgabe des Modellierers oder des zusätzlichen Modellierers, die Informationen über Variationen von Kandidatenkonfigurationsinformationen aufweist, an den Konfigurator (220) angepasst sind, und wobei der Konfigurator (220) zum Verändern der Kandidateninformationen basierend auf den Variationen angepasst ist.

8. Vorrichtung (200) gemäß einem der Ansprüche 5 bis 7, bei der der Modellierer (210) und der zusätzliche Modellierer (230) zum Berücksichtigen von Modellparametern oder Zuständen von der Datenverarbeitungseinrichtung (240) oder der zusätzlichen Datenverarbeitungseinrichtung (250) angepasst sind, die Informationen über einen Zustand einer Datenverarbeitungseinrichtung aufweisen.

9. Vorrichtung (100; 200) gemäß einem der Ansprüche 1 bis 8, bei der einer der Modellierer (210; 230) als eine Zustandsmaschine implementiert ist.

10. Vorrichtung (200) gemäß einem der Ansprüche 5 bis 9, bei der der Konfigurator (220) als eine Zustandsmaschine implementiert ist.

11. Vorrichtung (100; 200) gemäß einem der Ansprüche 1 bis 10, bei der der Modellierer (210) oder der zusätzliche Modellierer (230) zum Modellieren von Teilsätzen von Zuständen der Datenverarbeitungseinrichtung (240) oder der zusätzlichen Datenverarbeitungseinrichtung (250) basierend auf Modellparametern oder Zuständen von der Datenverarbeitungseinrichtung (240) oder der zusätzlichen Datenverarbeitungseinrichtung (250) angepasst sind, und wobei der Modellierer (210) oder der zusätzliche Modellierer (230) zum Modellieren eines anderen Teilsatzes von Zuständen der Datenverarbeitungseinrichtung (240) oder der zusätzlichen Datenverarbeitungseinrichtung (250) basierend auf einer Interpolation zwischen Zuständen des Teilsatzes von Zuständen der Datenverarbeitungseinrichtung (240) oder der zusätzlichen Datenverarbeitungseinrichtung (250) angepasst sind.

12. Vorrichtung (200) gemäß einem der Ansprüche 6 bis 11, bei der der Modellierer (210) oder der zusätzliche Modellierer (230) angepasst ist, um Modellparameter oder Zustände, die durch Vektorwertfunktionen dargestellt sind, auszutauschen.

13. Vorrichtung (200) gemäß einem der Ansprüche 6 bis 12, bei der der Modellierer (210) oder der zusätzliche Modellierer (230) zum Austauschen von Modellparametern oder Zuständen, die unterschiedliche Schichten eines Mehrschichtkommunikationssystems darstellen, mit der Datenverarbeitungseinrichtung (240) oder der zusätzlichen Datenverarbeitungseinrichtung (250) angepasst ist.

14. Vorrichtung (100; 200) gemäß einem der Ansprüche 1 bis 13, bei der der Modellierer (210) oder der zusätzliche Modellierer (230) zum Austauschen von Modellparametern oder Zuständen mit der Datenverarbeitungseinrichtung (240) oder der zusätzlichen Datenverarbeitungseinrichtung (250) angepasst ist, die in einer Protokollschicht, einer Verbindungsschicht, einer Anwendungsschicht, einer physikalischen Schicht, einer Netzwerkschicht, einer Transportschicht, einer Präsentationsschicht, einer Sitzungsschicht oder einer Medienzugriffssteuerschicht implementiert sind.

15. Vorrichtung (200) gemäß einem der Ansprüche 6 bis 14, bei der der Modellierer (210) oder der zusätzliche Modellierer (230) zum Austauschen von Modellparametern oder Zuständen mit der Datenverarbeitungseinrichtung (240) oder der zusätzlichen Datenverarbeitungseinrichtung (250) angepasst ist und der Konfigurator (220) zum Auswählen von Konfigurationszuständen oder Modellparametern basierend auf einem Optimieren einer objektiven Funktion angepasst ist.

16. Vorrichtung (200) gemäß einem der Ansprüche 6 bis 15, bei der der Modellierer (210) oder der zusätzliche Modellierer (230) zum Austauschen von Modellparametern oder Zuständen mit der Datenverarbeitungseinrichtung (240) oder der zusätzlichen Datenverarbeitungseinrichtung (250) angepasst ist, wobei eine derselben in einer Anwendungsschicht implementiert ist, und wobei der Konfigurator (220) zum Auswählen von Konfigurationszuständen oder Modellparametern basierend auf einem mittleren Meinungswert angepasst ist.

17. Vorrichtung (200) gemäß einem der vorhergehenden Ansprüche, die zusätzliche Modellierer zum Modellieren zusätzlicher Datenverarbeitungseinrichtungen aufweist.

18. Vorrichtung (200) gemäß einem der vorhergehenden Ansprüche, bei der der Modellierer (210) oder der zusätzliche Modellierer (230) zum Austauschen von Modellparametern oder Zuständen angepasst ist, die maximale Datenraten $R_{max,k}$ einer Anwendung oder eines Benutzers oder einer Entität k aufweisen, die durch die Datenverarbeitungseinrichtung (240) oder die zusätzliche Datenverarbeitungseinrichtung (250) unterstützbar sind.

19. Vorrichtung (200) gemäß einem der vorhergehenden Ansprüche, bei der der Modellierer (210) oder der zusätzliche Modellierer (230) angepasst ist zum Modellieren der Datenverarbeitungseinrichtung (240) oder der zusätzlichen Datenverarbeitungseinrichtung (250) durch ein Produkt einer maximalen Datenrate $R_{max,k}$ einer Anwendung oder eines Benutzers oder einer Entität k, die durch die Datenverarbeitungseinrichtung (240) oder die zusätzliche Datenverarbeitungseinrichtung (250) unterstützbar ist, und eines Koeffizienten $\alpha_k$, der einem Ressourcenverbrauch einer Anwendung oder eines Benutzers oder einer Entität k zugeordnet ist, wobei eine tatsächliche Anwendungsdatenrate $R_k$ gemäß

$$R_k = R_{max,k} \; \alpha_k$$

erhalten wird.

20. Verfahren zum Unterstützen einer Datenkommunikation zwischen einer Konfigurationseinrichtung (110) und einer Datenverarbeitungseinrichtung (120), wobei die Konfigurationseinrichtung (110) zum Verwalten einer Kommunikation zwischen der Datenverarbeitungseinrichtung (120) und zumindest einer zusätzlichen Datenverarbeitungseinrichtung (130) basierend auf einer Mehrzahl von Zuständen der Datenverarbeitungseinrichtung (120) oder der zusätzlichen Datenverarbeitungseinrichtung (130) wirksam ist, wobei das Verfahren folgenden Schritt aufweist:

Simulieren der Datenverarbeitungseinrichtung (120), um zumindest einen Teilsatz der Zustände der Datenverarbeitungseinrichtung (120) oder zumindest ein für die Zustände kennzeichnendes Maß aus empfangenen Modellparametern wiederzuerlangen, die eine reduzierte Datenmenge verglichen mit Zustandsdaten aufweisen, die die Zustände beschreiben, wobei die empfangenen Modellparameter eine maximale Datenrate aufweisen, die durch die Datenverarbeitungseinrichtung oder die zusätzliche Datenverarbeitungseinrichtung unterstützt wird.

21. Verfahren gemäß Anspruch 20, das einen Schritt eines Empfangens der Modellparameter von der Datenverarbeitungseinrichtung (120) aufweist.

22. Verfahren gemäß Anspruch 20 oder 21, das einen Schritt eines Empfangens von Modellparametern von der Konfigurationseinrichtung (110) und einen Schritt eines Extrahierens von Konfigurationszuständen aufweist.

23. Verfahren gemäß einem der Ansprüche 20 bis 22, das einen Schritt eines Empfangens von Modellparametern von einer Extraktionseinheit (150) aufweist, wobei die Extraktionseinheit (150) zum Ableiten von Modellparametern von allen Zuständen der Datenverarbeitungseinrichtung (120) angepasst ist.

24. Verfahren gemäß einem der Ansprüche 20 oder 23, das einen Schritt eines Übertragens von Modellparametern von einer Extraktionseinheit (150) aufweist, wobei die Extraktionseinheit (150) zum Ableiten von Modellparametern von Zuständen für den Modellierer (140) angepasst ist.

25. Verfahren gemäß einem der Ansprüche 20 oder 24, das einen Schritt eines Modellierens einer zusätzlichen Datenverarbeitungseinrichtung (250); einen Schritt eines Austauschens von Kandidatenkonfigurationsinformationen mit einem Konfigurator (220); und einen Schritt eines Auswählens von Konfigurationszuständen oder Modellparametern für die Datenverarbeitungseinrichtung (240) oder die zusätzliche Datenverarbeitungseinrichtung (250) basierend auf den ausgetauschten Kandidatenkonfigurationsinformationen aufweist.

26. Verfahren gemäß einem der Ansprüche 20 bis 25, das einen Schritt eines Übertragens von Modellparametern oder Konfigurationszuständen an die zusätzliche Datenverarbeitungseinrichtung (250) oder die Datenverarbeitungseinrichtung; einen Schritt eines Empfangens von Modellparametern oder Zuständen, die von der zusätzlichen Datenverarbeitungseinrichtung (250) empfangen werden; und einen Schritt eines Modellierens der zusätzlichen Datenverarbeitungseinrichtung (250) basierend auf Modellparametern oder Zuständen, die von der zusätzlichen Datenverarbeitungseinrichtung (250) empfangen werden, aufweist.

27. Computerprogramm mit einem Programmcode zum Durchführen eines der Verfahren gemäß den Ansprüchen 20 bis 24, wenn der Programmcode auf einem Computer abläuft.

**Revendications**

1. Appareil (100) pour assister la communication de données entre un moyen de configuration (110) et un moyen de traitement de données (120), ledit moyen de configuration (110) étant opérationnel pour gérer la communication entre ledit moyen de traitement de données (120) et au moins un moyen de traitement de données additionnel (130) sur base d'une pluralité d'états dudit moyen de traitement de données (120) ou du moyen de traitement de données additionnel (130), ledit appareil (100) comprenant:

un modeleur (140) destiné à simuler ledit moyen de traitement de données (120) pour extraire au moins un sous-ensemble desdits états dudit moyen de traitement de données (120) ou au moins une mesure caractéristique pour lesdits états des paramètres de modèle reçus comprenant une quantité de données réduite comparé aux données d'état décrivant lesdits états, où les paramètres de modèle reçus comprennent un débit de données maximum supporté par le moyen de traitement de données ou le moyen de traitement de données additionnel.

2. Appareil (100) selon la revendication 1, mis en oeuvre dans le moyen de configuration (110) et dans lequel le modeleur (140) est adapté pour recevoir les paramètres de modèle dudit moyen de traitement de données (120).

3. Appareil (100) selon la revendication 1 ou 2, mis en oeuvre dans le moyen de traitement de données (120) et dans lequel le modeleur (140) est adapté pour recevoir les paramètres de modèle dudit moyen de configuration (110) et pour extraire les états de configuration ou au moins une mesure caractéristique pour lesdits états.

4. Appareil (100) selon l'une des revendications précédentes, dans lequel le modeleur (140) est adapté pour recevoir les paramètres de modèle d'une unité d'extraction (150), l'unité d'extraction (150) étant adaptée pour dériver les paramètres de modèle des états du moyen de traitement de données (120) ou du moyen de configuration (110).

5. Appareil (200) selon l'une des revendications précédentes, comprenant un modeleur additionnel (230) pour le moyen de traitement de données additionnel (250), l'appareil (200) comprenant un configurateur (220), le modeleur (210) et le modeleur additionnel (230) étant adaptés pour échanger les informations de configuration de candidat avec le configurateur (220), le configurateur (220) étant adapté pour sélectionner un paramètre d'état de configuration ou paramètre de modèle pour le moyen de traitement de données (240) ou le moyen traitement de données additionnel (250) sur base des informations de configuration de candidat échangées avec le modeleur (210) et le modeleur additionnel (230).

6. Appareil (200) selon la revendication 5, adapté pour transmettre les paramètres de modèle ou les états de configuration au moyen de traitement de données (250) ou au moyen de traitement de données additionnel (250), dans lequel le modeleur additionnel (230) est adapté pour modeler le moyen de traitement de données additionnel (250) sur base des paramètres de modèle ou des états reçus du moyen de traitement de données additionnel (250) ou d'une unité d'extraction.

**7.** Appareil (200) selon l'une des revendications 5 ou 6, dans lequel le modeleur (210) ou le modeleur additionnel (230) sont adaptés pour fournir la sortie du modeleur ou du modeleur additionnel au configurateur (220) comprenant des informations sur des variations des informations de configuration de candidat et dans lequel le configurateur (220) est adapté pour modifier les informations de candidat sur base des variations.

**8.** Appareil (200) selon l'une des revendications 5 à 7, dans lequel le modeleur (210) et le modeleur additionnel (230) sont adaptés pour considérer les paramètres de modèle ou les états du moyen de traitement de données (210) ou du moyen de traitement de données additionnel (250) comprenant les informations sur un état d'un moyen de traitement de données.

**9.** Appareil (100; 200) selon l'une des revendications 1 à 8, dans lequel l'un des modeleurs (210; 230) est mis en oeuvre comme machine d'état.

**10.** Appareil (200) selon l'une des revendications 5 à 9, dans lequel le configurateur (220) est mis en oeuvre comme machine d'état.

**11.** Appareil (100; 200) selon l'une des revendications 1 à 10, dans lequel le modeleur (210) ou le modeleur additionnel (230) sont adaptés pour modeler des sous-ensembles d'états du moyen de traitement de données (240) ou du moyen de traitement de données additionnel (250) sur base des paramètres de modèle ou des états du moyen de traitement de données (240) ou du moyen de traitement de données additionnel (250), et dans lequel le modeleur (210) ou le modeleur additionnel (230) sont adaptés pour modeler un autre sous-ensemble d'états du moyen de traitement de données (240) ou du moyen de traitement de données additionnel (250) sur base d'une interpolation entre les états du sous-ensemble d'états du moyen de traitement de données (240) ou du moyen de traitement de données additionnel (250).

**12.** Appareil (200) selon l'une des revendications 6 à 11, dans lequel le modeleur (210) ou le modeleur additionnel (230) est adapté pour échanger les paramètres de modèle ou les états représentés par des fonctions de valeur de vecteur.

**13.** Appareil (200) selon l'une des revendications 6 à 12, dans lequel le modeleur (210) ou le modeleur additionnel (230) est adapté pour échanger les paramètres de modèle ou les états avec le moyen de traitement de données (240) ou le moyen de traitement de données additionnel (250) représentant différentes couches d'un système de communication multicouche.

**14.** Appareil (100; 200) selon l'une des revendications 1 à 13, dans lequel le modeleur (210) ou le modeleur additionnel (230) est adapté pour échanger les paramètres de modèle ou les états avec le moyen de traitement de données (240) ou le moyen de traitement de données additionnel (250) mis en oeuvre dans une couche de protocole, une couche de liaison, une couche d'application, une couche physique, une couche de réseau, une couche de transport, une couche de présentation, une couche de session ou une couche de commande d'accès de support.

**15.** Appareil (200) selon l'une des revendications 6 à 14, dans lequel le modeleur (210) ou le modeleur additionnel (230) est adapté pour échanger les paramètres de modèle ou les états avec le moyen de traitement de données (240) ou le moyen de traitement de données additionnel (250) et le configurateur (220) est adapté pour sélectionner les états de configuration ou les paramètres de modèle sur base d'une optimisation d'une fonction objective.

**16.** Appareil (200) selon l'une des revendications 6 à 15, dans lequel le modeleur (210) ou le modeleur additionnel (230) est adapté pour échanger les paramètres de modèle ou les états avec le moyen de traitement de données (240) ou le moyen de traitement de données additionnel (250), l'un d'eux étant mis en oeuvre dans une couche d'application, et le configurateur (220) est adapté pour sélectionner les états de configuration ou les paramètres de modèle sur base d'une note moyenne d'opinion.

**17.** Appareil (200) selon l'une des revendications précédentes, comprenant des modeleurs additionnels pour modeler le moyen de traitement de données additionnel.

**18.** Appareil (200) selon l'une des revendications précédentes, dans lequel le modeleur (210) ou le modeleur additionnel (230) est adapté pour échanger les paramètres de modèle ou les états comprenant les débits de données maximaux

$R_{max,k}$ d'une application ou d'un utilisateur ou d'une entité k supportable par le moyen de traitement de données (240) ou le moyen de traitement de données additionnel (250).

19. Appareil (200) selon l'une des revendications précédentes, dans lequel le modeleur (210) ou le modeleur additionnel (230) est adapté pour modeler le moyen de traitement de données (240) ou le moyen de traitement de données additionnel (250) par un produit d'un débit de données maximum $R_{max,k}$ d'une application ou d'un utilisateur ou d'une entité k supportable par le moyen de traitement de données (240) ou le moyen de traitement de données additionnel (250) et d'un coefficient $\alpha_k$ associé à une consommation de ressources d'application ou d'utilisateur ou d'entité k pour obtenir un débit de données d'applications réel $R_k$, selon

$$R_k = R_{max,k}\, \alpha_k.$$

20. Procédé pour assister la communication de données entre un moyen de configuration (110) et un moyen de traitement de données (120), ledit moyen de configuration (110) étant opérationnel pour gérer la communication entre ledit moyen de traitement de données (120) et au moins un moyen de traitement de données additionnel (130) sur base des états dudit moyen de traitement de données (120) ledit procédé (100) comprenant les étapes consistant à:

   simuler ledit moyen de traitement de données (120) pour extraire au moins un sous-ensemble desdits états ou au moins une mesure caractéristique pour lesdits états dudit moyen de traitement de données (120) des paramètres de modèle reçus comprenant une quantité de données réduite comparé aux données d'état décrivant lesdits états, où les paramètres de modèle reçus comprennent un débit de données maximum supporté par le moyen de traitement de données ou le moyen de traitement de données additionnel.

21. Procédé selon la revendication 20, comprenant une étape consistant à recevoir les paramètres de modèle dudit moyen de traitement de données (120).

22. Procédé selon la revendication 20 ou 21, comprenant une étape consistant à recevoir les paramètres de modèle dudit moyen de configuration (110) et une étape consistant à extraire les états de configuration.

23. Procédé selon l'une des revendications 20 à 22, comprenant une étape consistant à recevoir les paramètres de modèle d'une unité d'extraction (150), l'unité d'extraction (150) étant adaptée pour dériver les paramètres de modèle de tous les états du moyen de traitement de données (120).

24. Procédé selon l'une des revendications 20 ou 23, comprenant une étape consistant à transmettre les paramètres de modèle d'une unité d'extraction (150), l'unité d'extraction (150) étant adaptée pour dériver les paramètres de modèle des états pour le modeleur (140).

25. Procédé selon l'une des revendications 20 ou 24, comprenant une étape consistant à modeler un moyen de traitement de données additionnel (250); une étape consistant à échanger les informations de configuration de candidat avec un configurateur (220); et une étape consistant à sélectionner les états de configuration ou les paramètres de modèle pour le moyen de traitement de données (240) ou le moyen de traitement de données additionnel (250) sur base des informations de configuration de candidat échangées.

26. Procédé selon l'une des revendications 20 à 25, comprenant une étape consistant à transmettre les paramètres de modèle ou les états de configuration au moyen de traitement de données additionnel (250) ou au moyen de traitement de données; une étape consistant à recevoir les paramètres de modèle ou les états reçus du moyen de traitement de données additionnel (250); et une étape consistant à modeler le moyen de traitement de données additionnel (250) sur base des paramètres de modèle ou des états reçus du moyen de traitement de données additionnel (250).

27. Programme d'ordinateur ayant un code de programme pour réaliser l'un des procédés des revendications 20 à 26 lorsque le code de programme est exécuté sur un ordinateur.

FIG 1A

FIG 1B

Modeller — model parameters → DPM

140 / 100

state parameters · config. state parameters

120

communication

Config. Means

add. DPM

110

130

## FIG 1C

Modeller ← config. state parameters ← DPM

140 / 100

model parameters

120

communication

Config. Means ← state parameters ← add. DPM

110

130

## FIG 1D

EP 1 901 524 B1

Tunel model

Config. Means → Modeller ⌐140

⌐110    Tuned layer state    ⌐110

⌐154

Decision,
E.g. selected layer state

Model parameters

add. DPM

communication

Extraction unit

⌐150

All considered layer states

⌐130

DPM

⌐120

⌐152

FIG 1E

All selected layer states

Config. Means ────────── Extraction unit

110

150

162

EP 1 901 524 B1

One or multiple
Layer states

Model parameters

Modeller

140  100

Tuned layer state    Tunel model

add. DPM

communication

130

Intra-layer optimizer

160

Finally selected layer state

DPM

120

164

FIG 1F

FIG 2A

FIG 2B

FIG 3

EP 1 901 524 B1

FIG 4

FIG 5

FIG 6

**FIG 7**

700 ↗

**FIG 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005041516 A2

### Non-patent literature cited in the description

- **L.-U. CHOI ; W. KELLERER ; E. STEINBACH.** Cross-Layer Optimization for Wireless Multi-User Video Streaming. *Int. Conf. On Image Processing,* 2004
- Bottom-Up Approach to Cross-layer Design for Video Transmission over Wireless Channels. **L.-U. CHOI ; M. T. IVRLAC ; E. STEINBACH ; J. A. NOSSEK.** Vehicular Technology Conf. spring, 2005, vol. 5, 3019-3025
- **S. KHAN ; Y. PENG ; E. STEINBACH ; M. SGROI ; W. KELLERER.** Application-Driven Cross-Layer optimization for Video Streaming over Wireless Networks. *IEEE Communications Magazine,* January 2006, vol. 44 (1), 122-230
- **E. SETTON ; T. YOO ; X. ZHU ; A. GOLDSMITH ; B. GIROD.** Cross-Layer Design of Ad Hoc Networks for Real-Time Video Streaming. *IEEE Wireless Communications,* August 2005, vol. 14 (4), 59-65
- **SANGIOVANNI-VINCENTELLI.** A synthesis and optimization procedure for fully and easily testable sequential machines. *IEEE Trans. On Computer-Aided Design of Integrated Circuits and Systems,* October 1989, vol. 8 (10), 2200-2107
- **E. KREYSZIG.** Advanced Engineering Mathematics. Wiley, 1993